# FASCICULE DE BREVET EUROPEEN

(11) **EP 1 729 241 B1**
(45) Date de publication et mention de la délivrance du brevet: **12.03.2008**
(21) Numéro de dépôt: 06113688.3
(22) Date de dépôt: 09.05.2006
(51) Int. Cl.: G06K 7/00, G06K 19/077

(54) **Procédé et système de paramétrage d'une station de terrain dans un réseau de communication.**
Verfahren und Vorrichtung zur Parametrisierung einer Feldstation in einem Kommunikationsnetzwerk
Method and system for setting parameters of a field station in a communication network.

(30) Priorité: 01.06.2005 FR 0551462
(43) Date de publication de la demande: 06.12.2006
(73) Titulaire: SCHNEIDER ELECTRIC INDUSTRIES SAS, 92500 Rueil-Malmaison (FR)
(72) Inventeur: Emmanuel, Michel, 16380, Chazelles (FR)
(74) Mandataire: Bié, Nicolas

(56) Documents cités:
- EP-A- 1 136 934
- EP-A- 1 324 494
- DE-C1- 19 601 511
- DE-C1- 19 842 351

## Description

La présente invention a pour objet un procédé de paramétrage d'une station de terrain pourvue d'une antenne pour échanger des données sans contact par technologie inductive RFID avec des étiquettes électroniques, d'un organe de signalisation et de circuits électroniques dont une mémoire contenant un paramètre tel que par exemple une adresse réseau. L'invention concerne également un système de paramétrage de la station de terrain.

Dans certains processus de fabrication ou de traitement, on cherche à identifier les produits ou mobiles en vue de suivre la gestion des informations liées aux dits produits ou mobiles. Une méthode connue consiste à affecter des données à chaque produit ou mobile à l'aide d'une étiquette électronique et à échanger ces informations avec des stations de terrain distribuées.

Un système d'identification RFID (en français Identification par Radio Fréquence) est couramment utilisé pour identifier à l'aide d'une station de terrain des objets portant chacun une étiquette électronique d'identification. A portée de la station de lecture/écriture, l'étiquette électronique échange avec la station des informations diverses tels que par exemple des informations d'identification ou des informations liées au processus de fabrication en cours.

Les stations de terrain dialoguent avec un équipement d'automatisme (serveur de données sur le réseau) au sein généralement d'un réseau de terrain tel que MODBUS, FIPIO, etc.... Dans un système d'identification de type RFID, chaque station comporte une antenne générant un champ magnétique permettant d'alimenter chaque étiquette électronique passant à sa portée et de dialoguer avec celle-ci selon un protocole de communication prédéfini. L'étiquette est alimentée par la "porteuse" émise à partir de l'antenne de la station. L'énergie captée par l'antenne de l'étiquette est transformée en énergie électrique et alimente les circuits internes (mémoire, circuit de commande,...) de ladite étiquette pour que celle-ci exécute les programmes pour lesquels elle est conçue. Cette étiquette électronique mémorise des données, exécute les ordres en provenance de la station et transmet les données demandées vers la station. La procédure d'échange comporte plusieurs phases, notamment : envoi d'énergie dès que l'étiquette arrive à portée de la station de terrain, envoi d'un ordre d'identification par la station de terrain, envoi d'un ordre de lecture/écriture, écriture des données ou lecture des données.

L'échange de données sans contact s'effectue par une technologie inductive qui est basée sur l'exploitation d'un signal électromagnétique (porteuse) moyenne fréquence pour la transmission sans contact d'information entre les stations et les étiquettes électroniques.

Les différentes stations de terrain sont identifiées au sein d'un réseau d'automatisme par des adresses individualisées. Actuellement, le paramétrage des adresses de chaque station de terrain s'effectue par un bouton ou une roue codeuse implémentée au sein de chaque station (document EP1324494) ou à l'aide d'un terminal que l'opérateur connecte à chacune des stations du réseau.

Le document DE 196 01 511 C1 décrit un procédé de paramétrage d'une station de lecture. Ce procédé est mis en oeuvre sans contact entre la station de lecture et une carte reliée à un ordinateur personnelle par une liaison série. Lorsque la carte est à proximité de la station, le champ magnétique de la station alimente les circuits de la carte qui peut envoyer des données de paramétrage récupérées sur l'ordinateur personnel vers la station. Dans ce procédé, le paramétrage nécessite une infrastructure lourde et coûteuse.

L'invention a pour but de fournir une solution simple pour paramétrer des stations de terrain, dans le cadre de petites applications. Elle permet de paramétrer par exemple l'adresse réseau des stations de terrain sans avoir à utiliser un composant de réglage (bouton ou roue codeuse) dans les stations ou sans avoir à connecter un terminal à la station ou à une carte externe.

Ce but est atteint par un procédé de paramétrage d'une station de terrain pourvue d'une antenne pour échanger des données sans contact par technologie inductive avec des étiquettes électroniques, et de circuits électroniques dont une mémoire contenant au moins un paramètre, ledit procédé étant caractérisé en ce que la station de terrain met en oeuvre des étapes de :
- Reconnaissance d'une étiquette électronique de paramétrage lorsque ladite étiquette électronique de paramétrage passe à portée de l'antenne,
- initialisation du paramètre de la station au moment où la station de terrain reconnaît l'étiquette électronique de paramétrage,
- détermination du paramètre de la station de terrain en fonction du temps où l'étiquette électronique de paramétrage reste à portée de l'antenne, et
- émission d'un signal à l'aide d'un organe de signalisation lors d'une modification du paramètre de la station de terrain.

Selon l'invention, la détermination du paramètre consiste à incrémenter le paramètre selon une fréquence prédéfinie tant que l'étiquette électronique de paramétrage reste à portée de l'antenne. Pour cela, l'organe de signalisation comporte une diode électroluminescente émettant un flash lumineux à chaque incrémentation du paramètre.

Selon l'invention, le procédé consiste également à émettre à l'aide de l'organe de signalisation un nombre de signaux correspondant au paramètre de la station de terrain mémorisé dans la mémoire, une fois que l'étiquette électronique de paramétrage n'est plus à portée de l'antenne de la station de terrain. L'organe de signalisation comporte par exemple une diode électroluminescente émettant à intervalles réguliers un nombre de flashes lumineux égal au paramètre de la station de terrain mémorisé dans la mémoire.

Selon l'invention, l'étape de reconnaissance de l'étiquette électronique de paramétrage est réalisée après une mise sous tension de la station de terrain, en présentant à portée de son antenne une étiquette électronique de paramétrage.

Le but est également atteint par un système de paramétrage d'une station de terrain pourvue d'une antenne et de circuits électroniques dont une mémoire destinée à contenir au moins un paramètre et pouvant échanger des données sans contact par technologie inductive avec des étiquettes électroniques. Le système se caractérise en ce qu'il comporte une étiquette électronique de paramétrage et en ce que la station de terrain comporte des moyens de reconnaissance de l'étiquette électronique de paramétrage, des moyens de détermination du paramètre en fonction du temps où l'étiquette électronique de paramétrage reste à portée de l'antenne et un organe de signalisation susceptible d'émettre un signal lors d'une modification du paramètre de la station de terrain.

Selon l'invention, les moyens de détermination initialisent le paramètre de la station de terrain lorsque l'étiquette électronique de paramétrage arrive à portée de l'antenne.

Selon l'invention, après initialisation, les moyens de détermination incrémentent le paramètre de la station de terrain selon une fréquence prédéfinie tant que l'étiquette électronique de paramétrage reste à portée de l'antenne. L'organe de signalisation comporte alors une diode électroluminescente émettant un flash lumineux à chaque incrémentation du paramètre de la station de terrain.

Selon l'invention, l'organe de signalisation est susceptible d'émettre un nombre de signaux correspondant au paramètre de la station de terrain mémorisé dans la mémoire, une fois que l'étiquette électronique de paramétrage n'est plus à portée de l'antenne.

L'organe de signalisation comporte une diode électroluminescente émettant à intervalles réguliers un nombre de flashes lumineux égal au paramètre de la station de terrain mémorisé.

Selon l'invention, les moyens de reconnaissance sont mis en oeuvre à chaque mise sous tension de la station de terrain.

Selon l'invention, le paramètre à mettre à jour est par exemple une adresse identifiant la station de terrain au sein d'un réseau de communication, tel que par exemple un réseau d'automatisme.

D'autres caractéristiques et avantages vont apparaître dans la description détaillée qui suit en se référant à un mode de réalisation donné à titre d'exemple et représenté par les dessins annexés sur lesquels :
- La figure 1 représente une vue en perspective d'un système d'identification d'étiquettes relié à un équipement d'automatisme.
- La figure 2 est un schéma fonctionnel d'un système de paramétrage d'une station de terrain du système d'identification de la figure 1.

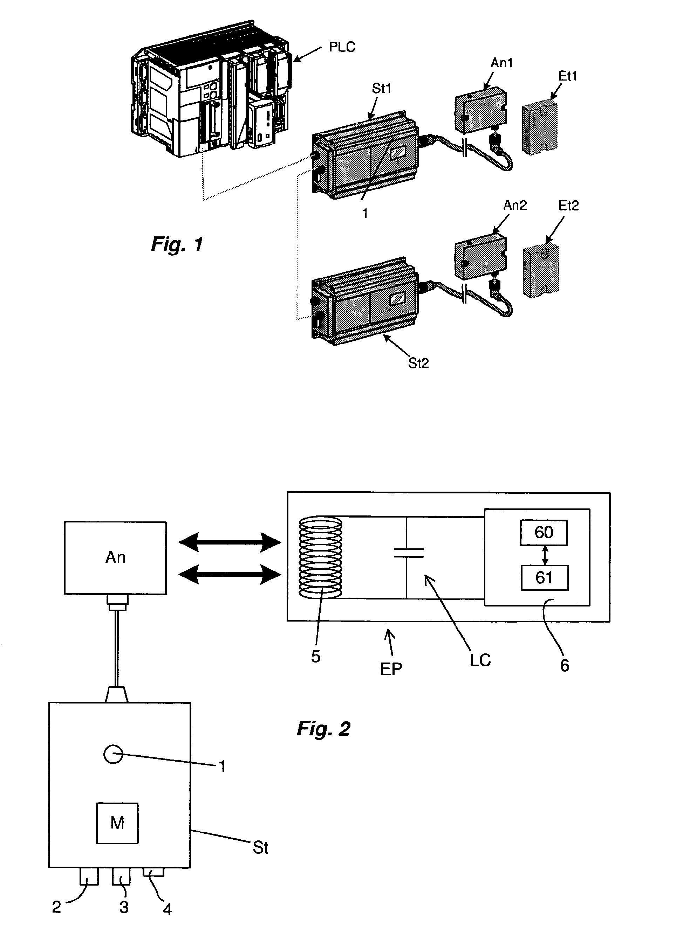

Le système illustré à la figure 1 comporte des stations de terrain St1, St2 pourvues chacune d'une antenne An1, An2 externes et capables d'échanger, sans contact par technologie inductive de type RFID, des données avec des étiquettes électroniques Et1, Et2 équipées de mémoires stockant des données.

Les étiquettes électroniques Et1, Et2 sont de type RFID et sont fixées sur des produits ou mobiles du processus à gérer ou contrôler et défilent au fur et à mesure à portée des stations de terrain telles que St1, St2.

Chaque station de terrain St dialogue avec l'automatisme PLC (serveur de données sur le réseau) au sein généralement d'un réseau de terrain tel que MODBUS, FIPIO, etc....

L'antenne An1, An2 de la station St1, St2 génère un champ magnétique permettant d'alimenter chaque étiquette électronique Et1, Et2 passant à sa portée et permet à la station St1, St2 de dialoguer avec celle-ci. Chaque station de terrain St1, St2 comporte des connecteurs 2, 3, 4 (figure 2) qui permettent le raccordement de l'alimentation, le raccordement au réseau et le raccordement à un pupitre ou à un poste informatique tel qu'un PC. Un autre connecteur permet le raccordement de l'antenne An1, An2 qui peut être séparée de la station comme sur les dessins ou intégrée à la station. La station St1, St2 contient une mémoire M (figure 2) et des circuits électroniques d'interface avec des connecteurs d'entrées/sorties 2, 3, 4 et avec l'antenne.

L'échange de données sans contact s'effectue par une technologie inductive qui est basée sur l'exploitation d'un signal électromagnétique (porteuse) moyenne fréquence pour la transmission sans contact d'information entre les stations et les étiquettes électroniques.

Les différentes stations de terrain St1, St2 sont identifiées par des paramètres et notamment par exemple par des adresses individualisées au sein du réseau de terrain.

En référence à la figure 2, l'adresse d'une station de terrain St au sein du réseau peut être paramétrée à l'aide d'une étiquette spécifique constituée d'une étiquette électronique de paramétrage EP (ci-après étiquette de paramétrage) ayant une constitution similaire à celle d'une étiquette électronique classique d'identification Et1, Et2. Si la station de terrain St doit être adressée au sein du réseau, une étiquette de paramétrage EP est la première étiquette présentée devant la station de terrain St après sa mise sous tension.

Comme avec une étiquette électronique d'identification, l'échange de données entre la station de terrain St et l'étiquette de paramétrage EP s'effectue sans contact par une technologie inductive basée sur l'exploitation d'un signal électromagnétique (porteuse) moyenne fréquence. Ce type de technologie est connu dans l'art antérieur et n'est pas l'objet de la présente invention.

L'étiquette de paramétrage EP comporte une antenne 5 comportant un circuit oscillant LC et un circuit électronique 6 comprenant notamment une mémoire 60 et des moyens de traitement 61 de données pour interpréter les requêtes envoyées par la station de terrain St et pour envoyer les informations demandées. L'étiquette de paramétrage EP est alimentée par la "porteuse" émise à partir de l'antenne An d'une station de terrain St dès qu'elle arrive dans les limites de portée de ladite station de terrain St. L'énergie captée par l'antenne 5 de l'étiquette de paramétrage EP est transformée en énergie électrique et alimente les circuits électroniques 6 internes de l'étiquette de paramétrage EP. L'étiquette de paramétrage EP mémorise des données, exécute les ordres en provenance de la station de terrain St et transmet les données demandées vers la station de terrain St.

La mémoire 60 contenue dans l'étiquette de paramétrage EP est à titre indicatif une mémoire de technologie RAM, EEPROM ou FERAM et stocke, par exemple sous forme cryptée, un identifiant unique, des paramètres de communication, un code l'identifiant comme étiquette de paramétrage EP et éventuellement des paramètres d'utilisation ou des instructions de services de la station de terrain St.

La procédure d'échange entre la station de terrain St et l'étiquette de paramétrage EP comporte plusieurs phases, notamment :
- Envoi d'énergie dès qu'une étiquette de paramétrage arrive à portée d'une station de terrain St,
- envoi par la station de terrain St d'un ordre d'identification et réponse de l'étiquette de paramétrage EP avec envoi d'un identifiant unique,
- Requête de la station de terrain St pour récupérer les paramètres de communication à mettre en place entre la station de terrain St et l'étiquette de paramétrage EP.

En outre, pour paramétrer l'adresse réseau d'une station de terrain St, l'étiquette de paramétrage EP doit être la première étiquette présentée à portée de l'antenne An de la station de terrain St après sa mise sous tension. A chaque mise sous tension, la station de terrain St vérifie donc si la première étiquette qui lui est présentée est une étiquette électronique classique Et1, Et2 ou une étiquette de paramétrage d'adresse EP. La station de terrain St envoie une requête pour récupérer le code d'identification de l'étiquette présentée et met en oeuvre des moyens de reconnaissance pour identifier cette étiquette.

A la mise sous tension, si une station de terrain St identifie la première étiquette comme une étiquette de paramétrage d'adresse EP, elle initialise son adresse à 0 et charge un programme de paramétrage de son adresse réseau.

Selon ce programme de paramétrage, la station de terrain St détermine l'adresse en utilisant un compteur et une horloge. La station de terrain St incrémente ainsi le compteur en fonction du temps de maintien de l'étiquette de paramétrage EP à portée de son antenne An. Le compteur est par exemple incrémenté de 1 après chaque seconde passée par l'étiquette de paramétrage EP à portée de l'antenne An. A chaque incrémentation, la station de terrain St émet un signal à partir d'un organe de signalisation. L'organe de signalisation comporte par exemple un voyant 1 à diode électroluminescente (ou "Led") qui s'allume à chaque incrémentation ou un avertisseur sonore bipant à chaque incrémentation ou par exemple un afficheur de type LCD. L'adresse paramétrée dans la station de terrain St correspond donc par exemple au nombre final de flashes émis par le voyant 1 tant que l'étiquette de paramétrage EP est restée maintenue devant l'antenne An de la station St.

En retirant l'étiquette de paramétrage EP de la portée de l'antenne An de la station de terrain St, l'utilisateur stoppe l'incrémentation de l'adresse. La dernière valeur prise par le compteur est alors mémorisée dans sa mémoire M et constitue l'adresse réseau paramétrée pour la station de terrain St.

L'opérateur peut vérifier l'adresse paramétrée grâce à l'émission en écho, sur le voyant à diode électroluminescente 1 ou sur un autre voyant, d'un nombre de flashes rapides égal à cette adresse mémorisée. Ces flashes en écho sont par exemple d'une couleur distincte de ceux émis lors de la phase d'incrémentation.

Selon l'invention, différents paramètres peuvent être mis à jour dans la station de terrain St en utilisant plusieurs étiquettes de paramétrages EP distinctes, chacune des étiquettes étant affectée à la mise à jour d'un paramètre particulier de la station de terrain St. Dans ce cas, chaque étiquette de paramétrage EP présente un code d'identification distinct reconnu par la station de terrain St qui, en fonction de ce code, charge un programme de paramétrage particulier. Les différents programmes de paramétrage fonctionnent en fonction du temps où l'étiquette de paramétrage EP est maintenue à portée de l'antenne An de la station St.

Selon l'invention, ces différentes étiquettes de paramétrage permettant de mettre à jour différents paramètres de la station St peuvent également être regroupés physiquement dans une même étiquette de paramétrage. Cette étiquette de paramétrage comporte alors plusieurs zones, chaque zone étant affectée à la mise à jour d'un paramètre dans la station St. La présentation d'une zone de l'étiquette de paramétrage à portée de l'antenne An de la station de terrain St entraîne le chargement du programme de mise à jour correspondant dans la station. Chaque zone est par exemple munie d'un circuit oscillant LC et d'un circuit électronique associé 6 ou, selon une variante, l'étiquette de paramétrage peut comporter un circuit oscillant commun et un circuit électronique commun. Dans ce cas, l'étiquette de paramétrage dispose alors de moyens permettant à l'utilisateur de choisir le paramètre qu'il souhaite mettre à jour dans la station de terrain St; pour envoyer à la station de terrain St le code d'identification correspondant au programme de paramétrage à charger.

L'invention constitue donc un moyen simple, rapide, pratique et d'un coût réduit pour paramétrer une station de terrain St dans un réseau d'automatisme.

Le système de paramétrage selon l'invention peut être utilisé pour configurer d'autres paramètres que l'adresse réseau d'une station de terrain St et notamment le type de protocole réseau à utiliser ou des codes de fonctionnement.

## Revendications

1. Procédé de paramétrage d'une station de terrain (St) pourvue de circuits électroniques dont une mémoire (M) contenant au moins un paramètre et pourvue d'une antenne (An) pour échanger des données sans contact par technologie inductive RFID avec des étiquettes électroniques (Et1, Et2, EP), ledit procédé étant **caractérisé en ce que** la station de terrain (St) met en oeuvre des étapes de :
- reconnaissance d'une étiquette électronique de paramétrage (EP) lorsque ladite étiquette électronique de paramétrage passe à portée de l'antenne (An),
- initialisation du paramètre au moment où la station de terrain (St) reconnaît l'étiquette électronique de paramétrage (EP),
- détermination du paramètre en fonction du temps où l'étiquette électronique de paramétrage (EP) reste à portée de l'antenne (An), et
- émission d'un signal à l'aide d'un organe de signalisation (1) lors d'une modification du paramètre.

2. Procédé selon la revendication 1, **caractérisé en ce que** la détermination du paramètre consiste à incrémenter le paramètre selon une fréquence prédéfinie tant que l'étiquette électronique de paramétrage (EP) reste à portée de l'antenne (An).

3. Procédé selon la revendication 2, **caractérisé en ce que** l'organe de signalisation (1) comporte une diode électroluminescente émettant un flash lumineux à chaque incrémentation du paramètre.

4. Procédé selon la revendication 1 ou 2, **caractérisé en ce qu'**il consiste également à émettre à l'aide de l'organe de signalisation un nombre de signaux correspondant au paramètre mémorisé dans la mémoire (M), une fois que l'étiquette électronique de paramétrage (EP) n'est plus à portée de l'antenne (An) de la station de terrain (St).

5. Procédé selon la revendication 4, **caractérisé en ce que** l'organe de signalisation (1) comporte une diode électroluminescente émettant à intervalles réguliers un nombre de flashes lumineux égal au paramètre mémorisé dans la mémoire (M).

6. Procédé selon l'une des revendications 1 à 5, **caractérisé en ce que** l'étape de reconnaissance de l'étiquette électronique de paramétrage (EP) est réalisée après une mise sous tension de la station de terrain (St), en présentant à portée de son antenne (An) une étiquette électronique de paramétrage (EP).

7. Procédé selon l'une des revendications 1 à 6, **caractérisé en ce que** le paramètre à mettre à jour est une adresse identifiant la station de terrain (St) au sein d'un réseau de communication.

8. Système de paramétrage d'une station de terrain (St) pourvue d'une antenne (An) et de circuits électroniques dont une mémoire (M) contenant au moins un paramètre et pouvant échanger des données sans contact par technologie inductive avec des étiquettes électroniques (Et1, Et2, EP), **caractérisé en ce qu**'il comporte une étiquette électronique (EP) de paramétrage et en ce que la station de terrain (St) comporte des moyens de reconnaissance de l'étiquette électronique de paramétrage (EP), des moyens de détermination du paramètre en fonction du temps où l'étiquette électronique de paramétrage (EP) reste à portée de l'antenne (An) et un organe de signalisation (1) susceptible d'émettre un signal lors d'une modification du paramètre.

9. Système selon la revendication 8, **caractérisé en ce que** les moyens de détermination initialisent le paramètre lorsque l'étiquette électronique de paramétrage (EP) arrive à portée de l'antenne (An).

10. Système selon la revendication 9, **caractérisé en ce que** les moyens de détermination incrémentent le paramètre selon une fréquence prédéfinie tant que l'étiquette électronique de paramétrage (EP) reste à portée de l'antenne (An).

11. Système selon la revendication 10, **caractérisé en ce que** l'organe de signalisation (1) comporte une diode électroluminescente émettant un flash lumineux à chaque incrémentation du paramètre.

12. Système selon l'une des revendications 8 à 10, **caractérisé en ce que** l'organe de signalisation est susceptible d'émettre un nombre de signaux correspondant au paramètre mémorisé dans la mémoire (M), une fois que l'étiquette électronique de paramétrage (EP) n'est plus à portée de l'antenne (An).

13. Système selon la revendication 12, **caractérisé en ce que** l'organe de signalisation (1) comporte une diode électroluminescente émettant à intervalles réguliers un nombre de flashes lumineux égal au paramètre mémorisé.

14. Système selon l'une des revendications 8 à 13, **caractérisé en ce que** les moyens de reconnaissance sont mis en oeuvre à chaque mise sous tension de la station de terrain (St).

15. Système selon l'une des revendications 8 à 14, **caractérisé en ce que** le paramètre à mettre à jour est une adresse identifiant la station de terrain (St) au sein d'un réseau de communication.

## Claims

1. Method for setting parameters of a field station (St) equipped with electronic circuits including a memory (M) containing at least one parameter and equipped with an antenna (An) for exchanging data in a contact less manner through inductive RFID technology with electronic tags (Et1, Et2, EP), wherein in said method, the field station (St) implements steps for:
- recognizing an electronic setting tag (EP) when the said electronic setting tag passes within the range of the antenna (An),
- initializing the parameter at the moment when the field station (St) recognizes the electronic setting tag (EP),
- determining the parameter as a function of the time in which the electronic setting tag (EP) remains within the range of the antenna (An), and
- transmitting a signal using a signalling unit (1) when the parameter St) is being modified.

2. Method according to Claim 1, wherein the determination of the parameter consists in incrementing the parameter at a predefined frequency while the electronic setting tag (EP) remains within the range of the antenna (An).

3. Method according to Claim 2, wherein the signalling unit (1) includes a light-emitting diode emitting a flash of light each time the parameter increments.

4. Method according to Claim 1 or 2, wherein the method also consists in transmitting, using the signalling unit, a number of signals corresponding to the parameter St) stored in the memory (M), when the electronic setting tag (EP) is no longer within the range of the antenna (An) of the field station (St).

5. Method according to Claim 4, wherein the signalling unit (1) includes a light-emitting diode emitting at regular intervals flashes of light, the number of such flashes being equal to the parameter stored in the memory (M).

6. Method according to one of Claims 1 to 5, wherein the step for recognizing the electronic setting tag (EP) is carried out after the field station (St) is powered up, by presenting an electronic setting tag (EP) within the range of its antenna (An).

7. Method according to one of Claims 1 to 6, wherein the parameter to be updated is an address identifying the field station (St) in a communications network.

8. System for setting parameters of a field station (St) equipped with an antenna (An) and with electronic circuits including a memory (M) containing at least one parameter and able to exchange data in a contactless manner through inductive technology with electronic tags (Et1, Et2, EP), wherein the system includes an electronic setting tag (EP) and in that the field station (St) includes means for recognizing the electronic setting tag (EP), means for determining the parameter as a function of the time in which the electronic setting tag (EP) remains within the range of the antenna (An) and a signalling unit (1) capable of transmitting a signal when the parameter is being modified.

9. System according to Claim 8, wherein the determination means initialize the parameter when the electronic setting tag (EP) arrives within the range of the antenna (An).

10. System according to Claim 9, wherein the determination means increment the parameter at a predefined frequency while the electronic setting tag (EP) remains within the range of the antenna (An).

11. System according to Claim 10, wherein that the signalling unit (1) includes a light-emitting diode emitting a flash of light each time the parameter increments.

12. System according to one of Claims 8 to 10, wherein the signalling unit is capable of transmitting a number of signals corresponding to the parameter stored in the memory (M), when the electronic setting tag (EP) is no longer within the range of the antenna (An).

13. System according to Claim 12, wherein the signalling unit (1) includes a light-emitting diode emitting at regular intervals flashes of light, the number of such flashes being equal to the stored parameter.

14. System according to one of Claims 8 to 13, wherein the recognition means are executed each time the field station (St) is powered up.

15. System according to one of Claims 8 to 14, wherein the parameter to be updated is an address identifying the field station (St) in a communications network.

## Patentansprüche

1. Verfahren zum Parametrieren einer Bodenstation (St), die versehen ist mit elektronischen Schaltungen, wovon ein Speicher (M) wenigstens einen Parameter enthält, und mit einer Antenne (An), um Daten durch eine induktive RFID-Technologie mit elektronischen Etiketten (Et1, Et2, EP) kontaktlos auszutauschen, wobei das Verfahren **dadurch gekennzeichnet ist, dass** die Bodenstation (St) die folgenden Schritte ausführt:
- Wiedererkennen eines elektronischen Parametrierungsetiketts (EP), wenn sich das elektronische Parametrierungsetikett in der Reichweite der Antenne (An) bewegt,
- Initialisieren des Parameters zu dem Zeitpunkt, zu dem die Bodenstation (St) das elektronische Parametrierungsetikett (EP) wiedererkennt,
- Bestimmen des Parameters in Abhängigkeit von der Zeit, zu der sich das elektronische Parametrierungsetikett (EP) in der Reichweite der Antenne (An) befindet, und
- Aussenden eines Signals mit Hilfe eines Signalgebungsorgans (1), wenn ein Parameter modifiziert wird.

2. Verfahren nach Anspruch 1, **dadurch gekennzeichnet, dass** das Bestimmen des Parameters darin besteht, den Parameter mit einer im Voraus definierten Frequenz zu inkrementieren, solange sich das elektronische Parametrierungsetikett (EP) in der Reichweite der Antenne (An) befindet.

3. Verfahren nach Anspruch 2, **dadurch gekennzeichnet, dass** das Signalgebungsorgan (1) eine Leuchtdiode enthält, die bei jeder Inkrementierung des Parameters einen Lichtblitz aussendet.

4. Verfahren nach Anspruch 1 oder 2, **dadurch gekennzeichnet, dass** es außerdem darin besteht, mit Hilfe des Signalgebungsorgans eine Anzahl von Signalen auszusenden, die dem im Speicher (M) gespeicherten Parameter entspricht, sobald sich das elektronische Parametrierungsetikett (EP) nicht mehr in der Reichweite der Antenne (An) der Bodenstation (St) befindet.

5. Verfahren nach Anspruch 4, **dadurch gekennzeichnet, dass** das Signalgebungsorgan (1) eine Leuchtdiode enthält, die in regelmäßigen Intervallen eine Anzahl von Lichtblitzen aussendet, die gleich dem im Speicher (M) gespeicherten Parameter ist.

6. Verfahren nach einem der Ansprüche 1 bis 5, **dadurch gekennzeichnet, dass** der Schritt des Wiedererkennens des elektronischen Parametrierungsetiketts (EP) nach dem Anlegen der Spannung an die Bodenstation (St) ausgeführt wird, indem in der Reichweite ihrer Antenne (An) ein elektronisches Parametrierungsetikett (EP) präsentiert wird.

7. Verfahren nach einem der Ansprüche 1 bis 6, **dadurch gekennzeichnet, dass** der zu aktualisierende Parameter eine Adresse ist, die die Bodenstation (St) innerhalb eines Kommunikationsnetzes identifiziert.

8. System zum Parametrieren einer Bodenstation (St), die versehen ist mit einer Antenne (An) und mit elektronischen Schaltungen, wovon ein Speicher (M) wenigstens einen Parameter enthält und die Daten durch eine induktive Technologie mit elektronischen Etiketten (Et1, Et2, EP) kontaktlos austauschen können, **dadurch gekennzeichnet, dass** es ein elektronisches Parametrierungsetikett (EP) enthält und dass die Bodenstation (St) Mittel zum Wiedererkennen des elektronischen Parametrierungsetiketts (EP), Mittel zum Bestimmen des Parameters in Abhängigkeit von der Zeit, zu der sich das elektronische Parametrierungsetikett (EP) in der Reichweite der Antenne (An) befindet, und ein Signalgebungsorgan (1), das ein Signal bei einer Modifizierung des Parameters aussenden kann, enthält.

9. System nach Anspruch 8, **dadurch gekennzeichnet, dass** die Bestimmungsmittel den Parameter initialisieren, wenn das elektronische Parametrierungsetikett (EP) in der Reichweite der Antenne (An) ankommt.

10. System nach Anspruch 9, **dadurch gekennzeichnet, dass** die Bestimmungsmittel den Parameter mit einer im Voraus definierten Frequenz inkrementieren, solange sich das elektronische Parametrierungsetikett (EP) innerhalb der Reichweite der Antenne (An) befindet.

11. System nach Anspruch 10, **dadurch gekennzeichnet, dass** das Signalgebungsorgan (1) eine Leuchtdiode enthält, die bei jeder Inkrementierung des Parameters einen Lichtblitz aussendet.

12. System nach einem der Ansprüche 8 bis 10, **dadurch gekennzeichnet, dass** das Signalgebungsorgan eine Anzahl von Signalen, die dem im Speicher (M) gespeicherten Parameter entspricht, aussenden kann, sobald sich das elektronische Parametrierungsetikett (EP) nicht mehr in der Reichweite der Antenne (An) befindet.

13. System nach Anspruch 12, **dadurch gekennzeichnet, dass** das Signalgebungsorgan (1) eine Leuchtdiode enthält, die in regelmäßigen Intervallen eine Anzahl von Lichtblitzen aussendet, die gleich dem gespeicherten Parameter ist.

14. System nach einem der Ansprüche 8 bis 13, **dadurch gekennzeichnet, dass** die Wiedererkennungsmittel bei jedem Anlegen der Spannung an die Bodenstation (St) betrieben werden.

15. System nach einem der Ansprüche 8 bis 14, **dadurch gekennzeichnet, dass** der zu aktualisierende Parameter eine Adresse ist, die die Bodenstation (St) innerhalb eines Kommunikationsnetzes identifiziert.
